(19) Europäisches Patentamt
European Patent Office
Office européen des brevets

(11) EP 2 756 846 A1

(12) EUROPEAN PATENT APPLICATION

(43) Date of publication:
23.07.2014 Bulletin 2014/30

(51) Int Cl.:
A61K 33/38 (2006.01)  A01N 59/16 (2006.01)
A01N 25/10 (2006.01)  A01N 25/34 (2006.01)

(21) Application number: 13151727.8

(22) Date of filing: 17.01.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicants:
• University of Graz
8010 Graz (AT)
• University of Maribor
2000 Maribor (SI)
• Predilnica Litija d.o.o.
1270 Litija (SI)

(72) Inventors:
• Pivec, Tanja
2325 Kidricevo (SI)
• Hribernik, Silvo
2000 Maribor (SI)
• Ribitsch, Volker
8010 Graz (AT)
• Stana-Kleinschek, Karin
2000 Maribor (SI)

(74) Representative: Schmidt, Karsten
ZACCO GmbH
Bayerstrasse 83
80335 München (DE)

(54) **Antimicrobial cellulose material and process of its production**

(57) A method of imparting antimicrobial properties to a cellulose-containing fibrous or porous material, said method comprising providing a cellulose-containing material; contacting said cellulose-containing material with a basic agent; contacting said material with a solution comprising silver ions at a first temperature, thereby forming a wetted material; optionally heating said wetted material to a second temperature, wherein said second temperature is greater than said first temperature; maintaining contact between said solution comprising silver ions and the material for a period of time sufficient to allow for the formation of silver particles on a surface of said material; optionally performing at least one washing step; and optionally drying said material.

Figure 1

EP 2 756 846 A1

**Description**

FIELD OF THE INVENTION

The present invention relates to a method for imparting cellulosic materials with antimicrobial activity and to materials produced by such methods. The invention employs *in situ* synthesis of silver nanoparticles on the surface of the cellulosic material.

BACKGROUND OF THE INVENTION

Antimicrobial cellulose-containing materials are used in various technological fields; most notably in the textile, medical/healthcare and in the food industry. Use of such materials also depends on the form, i.e. shape of the cellulose substrate. In this regard, antimicrobial fibers, yarns, woven and knitted fabrics are mostly used in textile field for manufacturing of sporting and other types of apparel, foot-wear, bed linen and mattresses. In combination with cellulose hydrogels, such materials find important use in medical field, especially for preparation of wound-dressings for treatment of wounds. Cellulose films or foils and paper with antimicrobial activity are used in food and cosmetic industry, mostly for packaging.

Due to the increased bacterial resistance to a growing number of antibiotics and other chemical agents, and due to the limited number of bacteria that are sensitive to the various antimicrobial substances, silver remains attractive as a very effective antimicrobial agent against a broad variety of bacterial and fungal species. Recent advance of nanotechnology has contributed to this interest in silver. On the other hand, though, governed by the concern over human health and environment, a growing concern relates to the non-ideal attachment of silver to certain antimicrobial materials, and the corresponding release of silver particles therefrom into the environment.

The attachment of silver on materials using binders or adhesive substances is the one method which provides antimicrobial activity in cellulose-containing materials, where the silver leaches from the material in small and controlled amounts.

Antimicrobial binders are used in JP2004190152. The antimicrobial agent comprises a polyalkylalkoxysiloxane, a cyclic/straight-chain polyalkylsiloxane, a cross-linking catalyst and a silver salt/copper salt of N-long-chain-acylamino acid as essential components.

KR100797098 describes a composite for a fiber-treating agent, which comprises a silver nano-sol, an organic silicon-based quaternary ammonium salt solution having a nonreactive amine and a binder. The silver particles are surface-treated by an ionic surfactant.

EP2026851 describes a finish applied to a target substrate, such as a fiber, fabric, or alginate, consisting essentially of at least one silver ion-releasing compound (preferably silver zirconium phosphate, silver zeolites or silver glass) and at least one binder compound (preferably a polyurethane-based binding agent such as WITCOBOND[(R)] W-293).

Another possible method for the preparation silver-containing material with reduced release of silver from the material is a method where the silver is present in the spinning solution for the manufacture (spinning) of the fibers.

In CN101440535, an antimicrobial agent (chitosan-silver complex) is added to a viscose spinning stock solution to prepare the antibacterial viscose fiber through spinning.

In JP10259531 there is described a method for supplying a cellulose acetate yarn with antimicrobial properties by adding the fine inorganic antimicrobial agent comprising silica and silver to the spinning dope of the cellulose acetate yarn.

In JP2160916 a metallic fine powder (e.g. silver, copper or zinc) having antimicrobial activity is dispersed in a solution of a cellulose derivative (e.g. acetylcellulose, acetylpropionylcellulose or acetylbutyrcellulose) in an organic solvent, and the resultant dispersion is then added to a solution of a copolymer containing acrylonitrile as main constituent units in an organic solvent. The obtained solution is subsequently spun to afford the objective fiber containing the cellulosic derivative present in a state of phase separation and the antimicrobial fine powder mainly in the cellulose derivative.

In WO2008100163 silver nanoparticles are employed directly in the spinning solution of cellulose for the manufacture of cellulosic fibers and nanofibers of bactericidal properties. The silver nanoparticles are obtained by reducing water-soluble silver salts in the presence of an aqueous solution of N-methylomorpholine N-oxide.

Impregnation of fiber material with a solution of a silver salt has also been used to produce silver-containing cellulose materials:

WO2010143901 describes a method of preparing a cellulose-AgO matrix having antimicrobial activity by introducing silver ions ($Ag^+$) into a natural cellulose matrix by dipping the natural cellulose matrix into a solution comprising AgCl dissolved in $NH_4OH$ and drying the matrix to form a cellulose-AgO complex.

RU2401349 describes a method comprising the preparation of a modifying aqueous solution of an acetate, lactate, propionate, or sulfate salt of silver, dipping a textile material in the solution and subsequently squeezing and drying the material.

Another antimicrobial agent for treating the fibers comprises a cation exchange surfactant, preferably benzalkonium chloride, a metal having an antimicrobial action, preferably the N-long chain acylamino acid salt of silver, copper, zinc or tin, and water is disclosed in JP8081880.

The use of silver composite or nanoparticles for impregnation of textile materials is also known:

WO2006049478 discloses antimicrobial fiber products coated with the composition includes nanosized silica-silver particles in which silver is bound to silica molecules, and to a water-soluble polymer.

A composition of silver nanoparticles and saponin was used in EP100817911 and a nanosilver-clay composite was used in EP100803176. EP0707793 describes a silver-containing antimicrobial agent (carboxymethyl cellulose containing silver) which has an affinity to the fiber.

A silver-coated bacterial cellulose nanofiber is produced by preparing a suspension of bacterial cellulose fibers, oxidizing the bacterial cellulose fibers; adding the thio- group to the polymer backbone; and reacting the resulting product with silver proteinate in WO2007140573.

CN101708341 discloses a method for preparing an Ag-containing bacterial cellulose hydrogel by soaking a bacterial cellulose hydrogel film in a solution of a silver metal precursor; then heating, and pressurizing the film to convert the silver precursor to silver nanoparticles.

In JP 4370270 a cellulosic fiber is impregnated with an aqueous solution of a metallic salt such as copper, silver, zinc, titanium or zirconium, for example, by immersion, wherein the metallic salt permeates into the yarn, treated with an aqueous solution of an acidic or alkali metallic salt and the water-soluble metallic salt is converted into the water-insoluble salt.

Despite several methods for binding of silver onto cellulosic materials being known, there is still a need for the improvement of the silver attachment to the fibrous or porous material. Various methods mentioned above use harmful binders, which also frequently decrease the hydrophilicity of treated materials, consequently interfering with their wetting and interaction ability. In the case where binders are not used, large amounts of silver tend to leach during the processing of the material and the subsequent use of the product.

The present invention addresses these shortcomings.

SUMMARY OF THE INVENTION

The present invention relates to a method of imparting antimicrobial properties to a cellulose-containing fibrous or porous material, said method comprising:

(i) providing a cellulose-containing material;
(ii) contacting said cellulose-containing material with a basic agent; thereafter
(iii) contacting said material with a solution comprising a silver (Ag) ions at a first temperature;
(iv) optionally heating said material and said solution comprising silver ions to a second temperature, wherein said second temperature is greater than said first temperature;
(v) maintaining contact between said solution comprising silver ions and the material for a period of time sufficient to allow for the formation of silver particles on at least one surface of said material;
(vi) optionally performing at least one washing step; and
(vii) optionally drying said material.

Another aspect of the invention relates to a method of producing an antimicrobial cellulose-containing material comprising the steps (i) to (vii) as defined above.

Yet another aspect of the invention relates to a method of adding metallic silver particles to a cellulose-containing material, said method comprising the steps (i) to (vii) as defined above.

In certain embodiments, steps (iv), (vi) and (vii) are not optional.

In one embodiment, the cellulose-containing material is selected from the group consisting of cellulose fibers, cellulose film, cotton fiber, cellulose-containing membrane, paper, pulp, and a cellulose-containing foam structure.

In another embodiment, the solution comprising Ag ions comprises dissolved $AgNO_3$. In other embodiments, the solution comprising Ag ions comprises $AgC_2H_3O_2$, $AgClO_4$, $Ag_2SO_4$ in dissolved form. Preferably, the solution comprising Ag ions has a concentration of Ag ions of from 0.1 mM to 50 mM, preferably of from 0.3 mM to 10 mM, most preferably from 0.4 mM to 1mM. In other embodiments the solution comprising Ag ions is an aqueous solution comprising 0.01 - 10 mM, preferably 0.1 to 1 mM of silver ions, e.g., in the form of a silver nitrate solution.

Preferably, the basic agent is in form of an aqueous solution having a pH of greater than pH 7, or of equal to or greater than pH 8, or of equal to or greater than pH 9, or of equal to or greater than pH 10, or of equal to or greater than pH 11. Preferably, the basic agent is NaOH solution. Alternatively, the basic agent may also be KOH solution. Preferably, the NaOH (or KOH) solution is at a concentration of from 1 to 15%wt, or from 2 to 10%wt, or from 3 to 6 %wt, based on the total weight of the NaOH (or KOH) solution.

The basic agent preferably comprises less than 0.01 mM of silver ions, or more preferably comprises no Ag ions.

On the other hand, the solution comprising Ag ions is preferably at a pH lower than the pH of the basic agent. E.g., the pH of the solution comprising Ag ions may be at least 1 pH unit lower, or at least 2 pH units lower, or at least 3 pH units lower than the pH of the basic agent. In other embodiments, the pH of the solution comprising Ag ions is equal to or lower than pH 5, or equal to or lower than pH 6, or equal to or lower than pH 7, or equal to or lower than pH 8.

In a preferred embodiment, at least part of said basic agent (e.g., above 50%, or 70% or 90% of said basic agent) is removed from the material between steps (ii) and (iii).

In another preferred embodiment, at least part of said solution containing Ag ions (e.g., above 50%, or 70% or 90% of said solution comprising Ag ions) is removed from the material after step (v).

In another embodiment, the pH of said solution comprising silver ions is at least 1 pH unit greater than the pH of said basic solution.

In one embodiment, the second temperature is at least 10°C greater than said first temperature.

In another embodiment, the first temperature is from 0 to 50°C, or from 10 to 40°C, or preferably from 20 to 30°C; and/or said second temperature is from 50 to 125°C, or from 55 to 125°C, or from 60 to 100°C, or preferably from 70 to 90°C. In one preferred embodiment, the first temperature is from 0 to 50°C and the second temperature is from 60 to 100°C.

According to one embodiment, the contacting the cellulose-containing material with the basic agent in step (ii) is for a period of from 1 to 60 minutes, or from 2 to 20 minutes, preferably, however, for a period of from 2 to 10 minutes or from 4 to 6 minutes.

According to another embodiment, the contacting in step (iii) is for a period of from 1 to 60 minutes, or from 2 to 20 minutes, preferably, however, for a period of from 2 to 10 minutes, or from 4 to 6 minutes.

According to another embodiment, said step of maintaining contact between said solution comprising Ag ions and the material in step (v) is for a period of from 1 to 60 minutes, or from 2 to 20 minutes, preferably, however, for a period of from 2 to 10 minutes, or from 4 to 6 minutes.

The invention also relates to the above described methods, wherein said at least one washing step comprises at least one of

(a) washing with $H_2O$ at a temperature of from 50 to 125°C, or from 60 to 105°C, or from 80 to 105°C, or preferably from 90 to 105°C;

(b) washing with $H_2O$ at a temperature of from 1 to 40°C, or from 10 to 40°C, or preferably from 20 to 30°C; and

(c) washing with an acidic aqueous solution having a pH value below pH 6, preferably at a temperature from 1 to 40°C, or from 10 to 40°C, or from 20 to 30°C.

In one embodiment, the method comprises all of washing steps (a) to (c), preferably in the stated order first (a), then (b) and then (c).

The washing in one or all of steps (a) to (c) are preferably at a bath ratio (i.e., the weight ratio between the dry fibrous or porous material and the washing solution) is from 1:1 to 1:100, or 1:5 to 1:50, or 1:10 to 1:50, or preferably 1:20 to 1:40.

The invention also relates to a cellulose-containing material, preferably fibrous or porous cellulose-containing material, or an antimicrobial fibrous or porous material, produced by a method as described above. Preferred materials of the invention are fibrous materials.

Preferably, the material treated according to the invention comprises 0.01 to 10%wt, or 0.01 to 5%wt, or 0.01 to 1 %wt, or 0.01 to 0.1 %wt of Ag, preferably metallic silver, most preferred metallic silver in form of particles or nanoparticles, based on the total weight of the material.

The invention also relates to a product comprising a material of the invention. The product is preferably selected from the group consisting of garment, footwear, bandage, wound dressing, absorbent product, foil, food packaging.

BRIEF DESCRIPTION OF THE DRAWINGS

Figure 1 shows a visualization of the *in situ* synthesis Ag nanoparticles on cellulosic material, according to the invention.

Figure 2 shows the loss of silver particles from materials of the invention, during washing.

DETAILED DESCRIPTION OF THE INVENTION

An "antimicrobial material", according to the invention, shall be understood to be a material which, when contacted with bacterial cells in an aqueous dispersion, reduces the number of bacterial cells inset aqueous dispersion of the time. Preferably, the antimicrobial character of a material is determined by the AATCC 100-1999 standard method. In certain embodiments of the invention, an "antimicrobial material" shall be understood as being a material that reduces the number of *Staphylococcus aureus* cells in dispersion by at least 50%, or 75%, or by 90% of the original cell number, when tested according to AATCC 100-1999.

The expression "cellulose-containing", in connection to a fibrous or porous material, shall be understood as requiring that the material comprises at least 1, 5, 10, 50, 75 or 90%wt of cellulose, relative to the total weight of the material. Particularly preferred cellulose-containing materials include 100% cellulose.

A "fibrous material", according to the invention, shall be understood as being a material comprising fibers. In preferred fibrous materials, at least 1, 10, 50, 70, 90, 95, 99 or 100%wt of the material is present in form of fibers.

A "porous material", according to the invention, is a material having pores. Preferred porous materials of the invention are foams, e.g., forms having a (number) average pore size of equal to or less than 1 mm. Other preferred porous materials include micro-pores, e.g., pores having a (number) average pore size of equal to or less than, e.g., 100 nm.

A "basic agent", according to the invention, shall be understood as being an aqueous solution having a basic pH. Preferred basic agents of the invention have a pH value of greater than pH 7, greater than pH 8, greater than pH 9, greater than pH 10, or greater than pH 11. Preferred basic agents are/comprise NaOH and/or KOH, preferably NaOH.

A "silver particle", according to the invention, shall be understood as being a particle comprising silver. Preferably the silver particle comprises metallic silver. Preferred silver particles of the invention are nanoparticles. Spherical particles are preferred.

A "nanoparticle", according to the invention shall be understood to be a particle having a largest cross-sectional dimension of from 1 nm to 100 nm. The "largest cross-sectional dimension" shall be understood to be the largest existing distance, from surface to surface, through the particle. Preferably, 80% (by number) of the particles formed on the porous or fibrous materials, according to the invention, are nanoparticles

A "surface of a fibrous or porous material", according to the invention, shall be understood as being any surface of the fibrous or porous material. The surface includes, e.g., the inner surface of a pore of a porous material, and/or the outer surface of a fiber within the bulk of a fibrous material. Also included is the surface of a pore (or micropore) within a fiber of the fibrous material.

An a "silver ion", or "Ag ion", according to the invention, shall be understood as being a positively charged silver atom, e.g., $Ag^+$.

The term "washing-resistance of an antimicrobial material' shall be understood to relate to the ability of a material to retain most of the adsorbed particulate antimicrobial agent (silver particles) in its interior and on the surface even after several washes, thus ensuring prolonged antimicrobial activity of the fibrous or porous material. Material according to the invention, modified in this manner, can contain a relatively low amount of silver, since excessive removal of silver is avoided. The negative effect of the release of silver on the environment and on humans is effectively reduced, and considerable cost savings are achieved due to a reduced amount of silver needed. The washing resistance of an antimicrobial material may be tested with a standardized washing test ISO 105-C03, applying a duration of one washing cycle of 30 minutes at 60°C, using a solution of the prescribed standardized washing agent at a concentration of 5 g/L. After washing, antimicrobial activity of a material may be tested and a determination of silver content may be carried out. The washing resistance of the antimicrobial material can be expressed in terms of %wt of silver retained in the material after, e.g., 5, 10, 15 or 20 washing cycles. The "antimicrobial property of a material" shall be understood to define the ability of the material to inactivate or avoid growth of bacteria in solution, when tested according to method AATCC 100-1999. This standardized dynamic shake test yields the recuction in bacterial cell number that occurs in a liquid solution after 24 hours of contact time between bacterial species and the tested material, according to AATCC 100-1999.

"Swelling of cellulose fibers" is understood as a physico-chemical process, occurring with a cellulosic material in alkaline media, which results in opening of the structure of fibrous cellulose materials and enlargement of pores in said fibers, thereby increasing the reactive surface area.

The present invention relates to a method for the fabrication of antimicrobial materials from natural or synthetic cellulose via *in situ* synthesis of silver nanoparticles on the surface and in the interior of fibrous or porous materials (substrates). A first phase of the process is the treatment of the fibrous material in an alkaline solution. Without wishing to be bound by theory, it is believed that the alkaline treatment has several effects: Alkaline treatment causes swelling of the cellulose substrate, resulting in particle formation not only on the outer surface of the fiber, but also in pores present in the interior of the material (as evidenced by line analysis of a fiber cross-section using energy dispersive X-ray analysis, see in the Examples). Alkali treatment may also produce additional reducing hydroxyl groups on the surface of the fibers, which are needed for the reduction of Ag ions to metallic silver, thus for the synthesis of silver particles. The second phase of the procedure includes the contacting of the swollen cellulose substrate with silver precursor solution, such as a silver ion containing solution, e.g., silver nitrate solution. The second phase may include a heating step. In the final, third phase of the procedure, a neutralization step, rinsing and drying of treated cellulosic material may be carried out.

The silver-containing cellulose material prepared by the above described procedure has excellent antimicrobial properties, and retains these properties even after several washing cycles. Treatment also results in an increased wettability of the silver particle-containing cellulose substrates. The synthesized particles are relatively uniformly and discretely distributed on the surface of the fibers or pores.

A side product of the synthesis procedure, i.e., the left-over treatment bath containing the alkali solution with additional silver particles, can be used for various purposes, because it is essentially a stable dispersion of silver particles in an aqueous medium. Due to the simplicity of the procedure, its inexpensiveness and it being environmentally friendly, the process is suitable for industrial mass production and can be incorporated in already existing processing of cellulose materials.

The present invention thus addresses the need for improved methods of incorporation of silver nanoparticles in fibrous and porous materials, for rendering the materials antimicrobial.

Apart from antimicrobial man-made (artificial) fibers, where antimicrobial agent is added into a polymer solution or melt, prior to the spinning of the filament, most of the presently available methods for adding silver to fibrous or porous materials concern themselves with surface deposition of silver particles. These methods result in an undesired significant release of Ag particles from the treated materials, upon use. Considering the potential toxicity of silver (when present in excess amounts), it is desirable to have improved and more irreversible attachment of the Ag particles to the fibers, to ensure slow and controlled release of silver that will not be harmful to the user or to the environment.

Incorporation of silver in cellulose-containing materials by in situ deposition of silver particles on the fibrous or porous material leads to silver being released in a controlled manner from the fibers and through the pores of the cellulose containing material only when needed, i.e. in the presence of moisture which is needed for bacteria in order to live.

The addition of silver particles of any kind into the solution of cellulose prior to spinning is an alternative for achieving fibers with embedded particles, but this procedure commonly results in fibers with inferior mechanical properties.

According to the present invention, existing fibers, yarns or flat samples of cellulose are treated in such a way that *in situ* formation of silver particles will occur on the fibers or on and within the porous material.

In the method of the invention, the starting (first) temperature of the reaction mixture is about 0-50°C, preferably about 10-40°C. Treatment starts at this relatively low temperature in order to ensure complete wetting of the fibrous material with silver ion containing solution before the reduction of the silver ions to metallic silver proceeds. This reduction is comparably rapid at elevated temperatures. Temperature of the reaction bath is thus first maintained at the low first temperature for e.g. between 3 and 30 minutes. Formation of metallic silver particles can in principle proceed and terminate at the low temperature without additional heating, but preferably the temperature is increased to a second temperature, e.g., after 5 minutes to above 60°C, or above 80°C. A preferred second temperature is from 60-100°C, more preferably from 70-90°C. This will ensure complete reduction of silver precursor into elementary silver particles. This increase in temperature may be achieved within a heating phase of e.g. 10 to 30 minutes, preferably 10-20 min. The maximum temperature of the treatment bath, i.e., the second temperature, should be kept for 2 to 30 minutes, preferably for 5-10 minutes.

The inventive methods may also include a post-treatment of the *in situ* Ag-modified cellulose fibrous material, in order to remove unreacted reactants (e.g. Ag ions) and other side-products. Post-treatment may consist of rinsing or washing the silver particle-containing fibrous or porous material with hot water (e.g., 70°C-100°C, preferably 90-100°C), followed by washing with cold water (e.g., 5-30°C). Residual alkali agent may then be neutralized by rinsing of the silver particle-containing fibers with a solution of e.g. acetic acid (the concentration of acidic solution may be 0.8 mM - 50 mM, preferably 10 mM - 30 mM). Optionally, a final washing step with cold water (5-30°C) can be performed to remove the acid. A suitable bath ratio, defined as the ratio between the weight of the dry fibrous or porous material and the weight of the silver-ion containing solution, is between 1:10 and 1:50, but preferably 1:20 to 1:40, for one or each of the consecutive washing steps.

The present invention provides a method for imparting antimicrobial properties to fibrous or porous samples of cellulose-containing materials by *in situ* synthesis of silver particles, preferably nanoparticles, on the treated materials. The present invention also relates to materials produced (i.e., modified) by methods of the present invention, and to products produced from such materials.

Silver nanoparticles are produced by pre-treatment the cellulose-containing material with a basic agent, and subsequently contacting the pretreated cellulose-containing material with reducible silver source, such as a solution containing silver ions. In a preferred embodiment, said basic agent is sodium hydroxide and the silver source is silver nitrate.

In a further preferred embodiment, said cellulose material is selected from the group consisting of natural fibers, wood fibers, plant fibers, cotton, hemp, jute, flax, ramie, sisal, regenerated cellulose fibers, modal, LYOCELL, viscose, e.g., in the form of yarns and fabrics. In other preferred embodiments, the cellulose-containing material is bacterial cellulose, a cellulose hydrogel, cellulose foil, e.g., cellophane, or paper.

In preferred embodiments of the invention, the porous or fibrous cellulose material is a woven material, a non-woven material, a knitted material, a crocheted material, a spun-bonded material, melt-blown material, a foamed material, or a sintered material.

In other preferred embodiments, the concentration of basic agent in water for pre-treating of the cellulose-containing material is between 2.5%wt and 7.5%wt, preferably 5 %wt, based on the total weight of the basic agent.

Preferably a bath ratio is applied which is between 1:5 and 1:30 (mass of cellulose-containing material to mass of basic agent), preferably 1:5 to 1:15. With the appropriate bath ratio according to the invention, one obtains a homogenous distribution of the silver particles throughout the sample. Preferably, the alkaline pretreatment is at about room temperature, e.g., at 20-30°C. In the method of the invention, the duration of the alkaline treatment is advantageously between 1 min and 60 min, or between 5 min and 20 minutes. At these conditions, cellulose swells sufficiently without incurring damages and reducing its structural integrity.

In preferred embodiments, the concentration of silver ions in the solution containing silver ions is between 0.01 mM and 50 mM, preferred between 0.1 mM and 1 mM. This silver precursor concentration sufficiently low to ensure deposition of most of the silver present in the treatment solution onto the cellulosic material, while at the same time the amount of silver is sufficiently high to ensure antimicrobial activity.

Preferably, the bath ratio in this treatment step is between 1:30 and 1:5 (by weight), preferably 1:15 to 1:5.

The present invention also relates to cellulosic material modified by a method of the invention. Such material has advantageous properties, in particular, washing resistant-antimicrobial activity and increased hydrophilicity.

Preferably, the modified material of invention is a fibrous material.

The present invention also relates to a product comprising the cellulose material of the invention. In preferred embodiments, the product is selected from the group of products consisting of clothes (sports clothes, footwear products, underwear, and bedclothes), shoes and mattress. Due to improved hydrophilicity, materials will be suitable for the production of medical materials, which will effectively absorb the liquid, while acting antimicrobially with no risk to patients (diapers, wound dressing, medical patches, hygienic pads, feminine hygiene products, sanitary towels, garment products, sintered products, membranes, filters, implantable medical products).

The present invention is based on a three-phase treatment of cellulose material with an *in situ* Ag-particle formation to render said material antimicrobial, thereby ensuring the presence of active Ag particles in the interior and exterior of the fibrous or porous substrates.

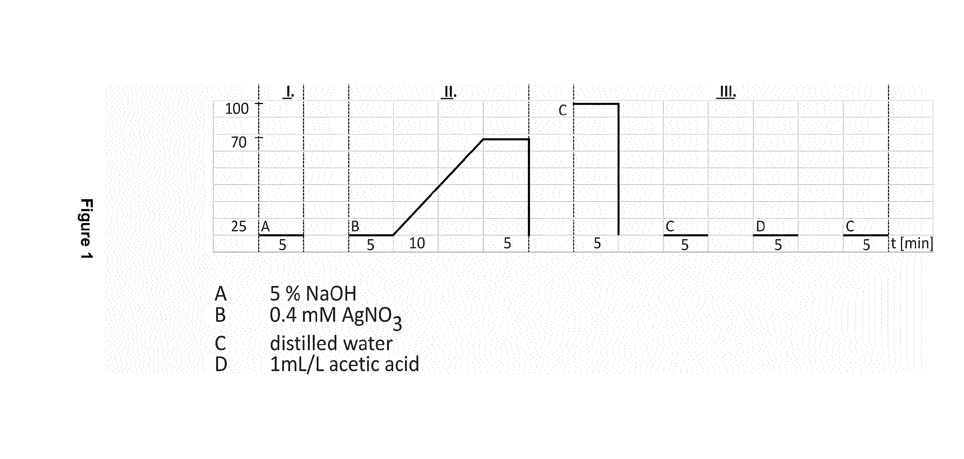

A schematic presentation of the treatment procedure is shown in Figure 1.

The first phase of the treatment procedure, the swelling of a cellulose fibrous substrate in alkaline solution, may be carried out in a 1-10 % (weight) solution (e.g., a 5 %wt. solution) of sodium hydroxide e.g., at 25°C for 5 minutes. An appropriate bath ratio, which is defined as the mass of the cellulose-containing material per mass of treatment solution, is e.g., 1:10. This ensures that the material is sufficiently wetted, while using only modest amounts of the alkaline solution.

Alkaline treatment of cellulose materials is a well-known pre-treatment procedure in textile processing industry; enhancement of mechanical and sorption properties of cellulose fibers is often achieved in this way. According to the present invention, the effect of pre-treatment of cellulose substrate with sodium hydroxide is threefold.

The first effect is the swelling of the material; alkali-cellulose is formed when cellulose substrate is immersed in a solution of, e.g., NaOH, where $Na^+$ ions are bound to hydroxyl groups, resulting in a more pronounced swelling, compared to water. Alkali treatment also disrupts the intermolecular hydrogen bonds between cellulose molecules and hence loosens the structure of the fiber. This swelling action that in return allows for a better access of $Ag^+$ ions into the available amorphous fractions of the cellulose fibrous or porous substrate in the second phase of the treatment procedure (i.e., treatment in the solution with a reducible silver source).

The second effect of the alkali treatment is the increase of the hydroxyl group content on the surface of the fibers, or in pores, which are needed for efficient reduction of $Ag^+$ ions to $Ag^0$, thereby forming metallic silver particles. Although cellulose itself acts as a reducing agent due to the presence of its hydroxyl groups, the reduction of silver precursor is more complete with/after alkali treatment. Sodium hydroxide treatment, which is preferred in the present invention, brings about an additional amount of hydroxyl groups into the cellulose substrates' interior, resulting in a rapid and complete reduction of silver ions into elementary silver.

The third advantageous effect of the alkaline solution in the treatment procedure, which takes place after the formation of silver nanoparticles, is indirect stabilization of the surplus Ag particles that are formed in the treatment bath in addition to those, formed on and inside fibrous substrates; alkali treatment of cellulose samples can dissolve surface-located amorphous fractions of the cellulose material to a limited extent, which then stabilizes silver particles in the surrounding solution. Left-over treatment solution is therefore not regarded as a waste product (which must be discarded), but can be used as a useful side-product, since it is essentially an aqueous-based stable dispersion of silver nanoparticles. As such, it can be used in various applications where stable colloidal silver dispersions are required.

After the alkali treatment, fibers are immersed in an aqueous solution comprising 0.01 - 10 mM, preferably 0.1 to 1 mM of silver ions, e.g., dissolved silver nitrate. In order to achieve homogenous nucleation of silver nanoparticles on the fibrous or porous substrate, it is crucial to ensure even wetting of the material with the silver precursor solution before its reduction proceeds; therefore, the wetting step is carried out at a low temperature (e.g., 10-30°C), preferably with rigorous mixing. Temperature may then be increased to at least 60, 70, or 80°C to effect a substantially complete reduction of the silver precursor to elementary silver.

The final phase of the deposition procedure may include rinsing or washing steps with water, e.g., with hot (at least 90°C) and cold water (lower than 50°C) and optionally an additional neutralization step with an acid agent. Rinsing or washing steps are useful for the removal of residual basic agent and silver nitrate. Further neutralization of the basic agent may be achieved with an acid solution, such as acetic acid (e.g., 5-30 mM) at e.g. 25°C. The procedure of depositing silver particles on fibrous or porous materials may be concluded by wringing or centrifugation of the treated material to remove excess liquids, and then drying at e.g. 50-100°C.

Alkali treatment of cellulose materials is an already applied to modify the mechanical properties of cellulose-containing materials. This effectively reduces the price of the *in situ* depositing procedure according to the present invention, since one can include the silver deposition step into existing production lines without significant changes in the remaining process machinery and parameters. Also, no increase in energy costs and water consumption would occur.

The invention shall now be further described in terms of the following illustrative examples.

EXAMPLES

EXAMPLE 1

Preparation of antimicrobial cellulose material comprising Ag particles

A silver-containing fibrous cellulose material was prepared according to the scheme set out in Figure 1. Fibrous cellulose containing material was contacted with 5% NaOH at 25°C for 5 minutes. Excess NaOH solution was removed and the fibrous material was then contacted with 0.4 mM $AgNO_3$ solution at 25°C for 5 minutes. The temperature was increased to 80°C and remained at 80°C for 5 minutes. The material was washed with hot (100°C) and cold (25°C) distilled water. Acid treatment was performed with acetic acid at 25°C and the fibrous material was then washed at 25°C with distilled water. Excess liquid was removed by centrifugation and the material was dried.

EXAMPLE 2

Stability of Ag-particles deposited on cellulose-containing materials

Leaching of silver nanoparticles or stability of silver nanoparticles on fibrous samples, treated according to Example 1 was tested with a washing procedure, adapted from a standard test method for color fastness to washing ISO 105-C03 (1987), followed by a determination of the amount of silver on the un-washed samples and on samples after 5, 10, 15 and 20 washing cycles: Samples were washed in a laboratory dyeing apparatus (Labomat BFA8-39993, Mathis, Switzerland), using metal cuvettes. The standard soap solution described in ISO 105-C03 (1987) with a concentration of 5 g/l, pre-heated to 60°C, was added. A bath ratio of 1:50 was used. One washing cycle was carried out for 30 min at 60°C with a rotation of the cuvettes at rpm = 40 $min^{-1}$.

Fiber samples were dried at room temperature after washing in absence of light and stored for further testing in an at 20 $\pm$ 2°C and 65 $\pm$ 2% relative humidity.

Silver content determination

Samples were weighed. 0.2 g of the silver particle-containing sample wascontacted with 20 ml of 65 % nitric acid ($HNO_3$) for 2 hours, keeping the temperature of the acid bath at boiling point. The solution was transferred, after cooling, into a 100 ml volumetric flask and distilled water was added to the mark. Ag concentration in solution was determined using atomic absorption spectroscopy (Perkin-Elmer AAnalyst 600).

An atomic absorption spectrometer equipped with an air-acetylene burner and silver hollow cathode lamp operating at 5 mA was used for determining silver without background correction. The operating conditions were as follows: wavelength: 328.1 nm, band pass: 0.7 nm, flow rate of acetylene: 2.5 l/min, and the flow-rate of air: 8 l/min. A standard solution of silver (500 mg/l) was prepared by dissolving the appropriate amount of silver nitrate ($AgNO_3$) in water with 1 % (v/v) $HNO_3$. The working standard solutions for preparation of calibration line were prepared by dilution.

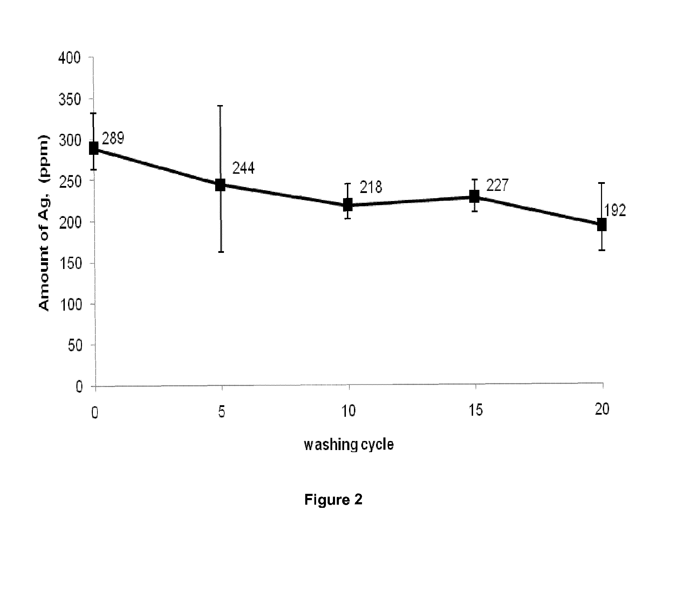

Results of the washing stability of Ag-particle containing materials are shown on Figure 2. Starting concentration of silver, present on the material, is reduced from 289 ppm to 192 ppm after twenty washing cycles (34% reduction of silver). The most pronounced removal of silver particles occurs during first five washing cycles - approx. 16% of silver is removed. During next five washing cycles, silver concentration on fibers decreases for additional 11 %. Following washing cycles do not cause a drastic removal of silver, since ten further washings only reduce the silver amount for further 8%. Results of the washing stability demonstrate that described invention gives functional deposition of silver that ensure prolonged silver release, which is necessary for antimicrobial activity, while at the same keeping the quantities of released silver low enough for safe use of the coated material.

EXAMPLE 3

Scanning electron microscopy and energy dispersive X-ray analysis of cellulose fibers with Ag-particles deposited thereon

Scanning electron microscope images were prepared from fibrous samples which were treated according to the invention. One sample was pre-treated by the basis agent, another sample was not. A positive effect of contacting the material to the basic agent prior to Ag particle formation was seen. In the case where a basic agent was used, more particles appear to reside on the surface of a fiber, as opposed to the fibers without sodium hydroxide pre-swelling. Energy dispersive X-ray analysis confirmed a higher amount of silver particles on pre-swollen fibers, as well as presence of silver particles at the interior (determined by line analysis of a fiber cross-section).

EXAMPLE 4

Antimicrobial activity of Ag-treated samples

The antimicrobial effect of an Ag-containing viscose fiber sample, prepared according to the invention, on gram-negative *Klebsiella pneumonia,* on gram-positive *Staphylococcus aureus* and on the fungus *Candida albicans* was investigated by the method according to AATCC 100-1999.

0.1 g of fiber sample was put into a 70 ml container and inoculated with 1.0 ml of inoculums containing $1-2 \times 10^5$ colony forming units (CFU). After incubation at 37 °C for 24 h, the cells were eluted from the samples by shaking in 50 ml of sterilized water for 1 min. 0.1 ml of these suspensions ($2 \times 10^2$ CFU) and diluted suspensions with physiological solution ($2 \times 10^1$ CFU) were plated on trypticase soy agar (TSA) and incubated at 37°C for 24 h. Afterwards the number of bacteria was counted and the reduction of bacteria, R, was calculated as follows:

$$R = \frac{B - A}{B} \times 100\ [\%]$$

where A is the number of bacteria recovered from the fiber sample in the plastic container incubated over the desired contact period (24 h) and B is the number of bacteria recovered from the fiber sample in the container immediately after inoculation (at "0" contact time).

The results of antimicrobial activity for the reference sample, unwashed sample treated according to the present invention, as well as treated sample after 20 washing cycles, are listed in Table 1.

Table 1:

| Sample | *Staphylococcus aureus* | *Klebsiella pneumoniae* | *Candida albicans* |
|---|---|---|---|
| reference sample | 88 % | No reduction | No reduction |
| treated, unwashed | 100 % | 100 % | 100 % |
| treated, 20x washed | 100 % | 100 % | 100 % |

As expected, no reduction in the bacteria *Klebsiella pneumonia* and *Candida albicans* was found for the reference sample, while the reduction of *Staphylococcus aureus* was 88 %. This unexpected antimicrobial activity of nontreated fibers to *Staphylococcus aureus* may be explained by an artifact, namely, by the fact that the employed cellulose fibers were hydrophobic in character, and therefore may have caused adsorption of bacteria to the material, due to hydrophobic interaction of the hydrophobic material with the hydrophobic cell walls of *Staphylococcus aureus.* In any case, also with *Staphylococcus aureus,* the reduction in cell number was greater with the silver-treated materials (100%).

Clearly, a treatment according to the invention imparts antimicrobial properties. Silver, which is well-known to effectively destroy numerous microorganisms, also destroyed all three chosen microorganisms. The excellent bacteria-reduction activity of a sample, which endured 20 washing cycles, is the evidence that even after several washes, there is still enough silver present to ensure the antimicrobial activity.

EXAMPLE 5

Water retention capacity

The water retention capacity of samples have been determined according to standard DIN 53 814. This method determines the quantity of water that the sample can absorb and retain under strictly controlled conditions. This property is expressed as a ratio between the mass of water retained in the sample after soaking (2 hours in non-ionic wetting agent) and centrifuging (20 min; 8000 - 10 000 $m^2s^{-1}$; 3000 rpm), and the mass of an absolute dry sample. The sample was dried in an oven at 105 °C for 4 h and cooled in a desiccator before weighing. All measurements were performed in four parallels, accordingly all data is depicted as average values with standard errors.

The water retention capacity of reference (untreated) fibers and silver-treated fibers are presented in Table 2. The reference fiber samples have a water retention value of 53 %. The procedure for depositing silver on the cellulose fibrous substrates, according to the invention, significantly improves their water retention capacity, increasing it from 55% to 77%. The increased water retention capacity is useful in many technical applications, such as medical application of such materials, as well as for further processing in conventional textiles processes, where wetting of a material is necessary.

Table 2:

| sample | water retention [%] |
|---|---|
| reference | 53 $\pm$ 4.28 |
| Ag-treated | 77 $\pm$ 3.13 |

EXAMPLE 6

Mechanical properties

Stress-strain curves were recorded using the software-controlled Vibrodyn 400 dynamometer (Lenzing Instruments) according to standard ISO 5079:1995 (Determination of breaking force and elongation at break of individual fibers). Clamped fiber samples were stretched to rupture, while computer software automatically records breaking force, tenacity values and the elongation at break. Fifty measurements were performed for each sample under standard conditions (20 $\pm$ 2°C, 65 $\pm$ 2% relative humidity). The used testing conditions were: gauge length - 10 mm, clamping with pretension - 70 cN and rate of extension - 20 mm / min. Before determination of tensile properties was carried out, linear density of fibers was determined on the Vibroskop 400 (Lenzing Instruments), according to ISO 1973:1995 (Determination of linear density - Gravimetric method and Vibroskop method).

Table 3 lists the most important mechanical properties of untreated and Ag-treated regenerated cellulose fibers. The titer of Ag-coated fibers has increased, indicating a surface layer of particles contributes to the mass of samples (titer is calculated as mass of fibers per unit length). The tenacity value of the regenerated cellulose fibers has decreased, which is mainly due to a treatment in sodium hydroxide solution for a given amount of time; opening of pores and enhancement of internal surface area inevitably results in a decrease of hydrogen bonds, connecting fibril walls and adjacent macromolecules. Therefore, breaking strength of fibers decreases, but it must be noted that this decrease would not affect the processability of Ag-coated fibers, since they retain structural and mechanical integrity that allows e.g. spinning of fibers into yarns. Elongation of Ag-coated fibers has substantially increased, again due to the pre-treatment in alkali solution, since loosening of the structure and disruption of hydrogen bonds effectively renders fibers less stiff.

Table 3:

| | reference sample | Ag-treated cellulose fiber |
|---|---|---|
| **Titer [dtex]** | 1.47 $\pm$ 0.1 | 1.64 $\pm$ 0.2 |

(continued)

| | reference sample | Ag-treated cellulose fiber |
|---|---|---|
| **Tenacity [cN/tex]** | 30.4 ± 2.8 | 22.9 ± 2.2 |
| **Elongation [%]** | 13.9 ± 1.1 | 26.4 ± 3.7 |

**Claims**

1. A method of imparting antimicrobial properties to a cellulose-containing fibrous or porous material, said method comprising:

   (i) providing a cellulose-containing material;
   (ii) contacting said cellulose-containing material with a basic agent; thereafter
   (iii) contacting said material with a solution comprising silver ions at a first temperature, thereby forming a wetted material;
   (iv) optionally heating said wetted material to a second temperature, wherein said second temperature is greater than said first temperature;
   (v) maintaining contact between said solution comprising silver ions and the material for a period of time sufficient to allow for the formation of silver particles on a surface of said material;
   (vi) optionally performing at least one washing step; and
   (vii) optionally drying said material.

2. The method of claim 1, wherein said cellulose-containing material is selected from the group consisting of cellulose fibers, cellulose film, cotton, viscose hemp, jute, flax, cellulose-containing membrane, paper and cellulose-containing foam structure.

3. The method of any one of the preceding claims, wherein said solution comprising silver ions is $AgNO_3$.

4. The method of any one of the preceding claims, wherein at least part of said basic agent is removed from the material between steps (ii) and (iii).

5. The method of any one of the preceding claims, wherein the pH of said solution comprising silver ions is at least 1 pH unit greater than the pH of said basic solution.

6. The method of any one of the preceding claims, wherein said first temperature is at least 10°C greater than said first temperature.

7. The method of any one of the preceding claims, wherein said first temperature is from 10 to 40°C, preferably from 20 to 30°C; and said second temperature is from 50 to 125°C, preferably from 60 to 100°C.

8. The method of any one of the preceding claims, wherein said contacting said cellulose-containing material with a basic agent in step (ii) is for a period of from 2 to 20 minutes, preferably for a period of from 2 to 10 minutes.

9. The method of any one of the preceding claims, wherein said contacting said material with a solution comprising silver ions in step (iii) is for a period of from 2 to 20 minutes, preferably for a period of from 2 to 10 minutes.

10. The method of any one of the preceding claims, wherein said step of maintaining contact between said solution comprising silver ions and the material in step (v) is for a period of from 2 to 20 minutes, preferably of from 2 to 10 minutes.

11. The method of any one of the preceding claims, wherein said at least one washing step comprises at least one of

    (a) washing with $H_2O$ at a temperature of from 50 to 125°C;
    (b) washing with $H_2O$ at a temperature of from 1 to 40°C; and
    (c) washing with an acidic aqueous solution having a pH value below pH 6, preferably at a temperature from 1 to 40°C.

**12.** Antimicrobial cellulose-containing fibrous or porous material produced by a method of any one of claims 1 to 5 above.

**13.** Material of claim 12, wherein said material comprises 0.01 to 10%wt of Ag, based on the total weight of the material.

**14.** Product comprising a material of claim 12 or 13.

**15.** Product of claim 14, wherein said product is selected from the group consisting of garment, footwear, bandage, absorbent product, mattress, wound dressing, foil, food packaging.

Figure 1

**Figure 2**

Europäisches Patentamt
European Patent Office
Office européen des brevets

## EUROPEAN SEARCH REPORT

Application Number

EP 13 15 1727

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI Week 201324 Thomson Scientific, London, GB; AN 2013-C37394 XP002698492, & CN 102 776 594 A (UNIV DONGHUA) 14 November 2012 (2012-11-14) * abstract * | 1-15 | INV. A61K33/38 A01N59/16 A01N25/10 A01N25/34 |
| X | DATABASE WPI Week 200552 Thomson Scientific, London, GB; AN 2005-510683 XP002697532, & RU 2 256 675 C2 (AS RUSSIA HIGH MOL WT CPDS INST) 20 July 2005 (2005-07-20) | 12-15 | |
| A | * abstract * | 1-11 | |
| X,D | WO 2010/143901 A2 (BIOTECH LLC AG [US]; KIM JU-YOUNG [US]) 16 December 2010 (2010-12-16) | 12-15 | TECHNICAL FIELDS SEARCHED (IPC) |
| A | * the whole document * | 1-11 | A61K A01N |
| X | ZHU CHUNYANG ET AL: "Controlled in-situ synthesis of silver nanoparticles in natural cellulose fibers toward highly efficient antimicrobial materials", JOURNAL OF NANOSCIENCE AND NANOTECHNOLOGY, AMERICAN SCIENTIFIC PUBLISHERS, US, vol. 9, no. 5, 1 January 2009 (2009-01-01), pages 3067-3074, XP009169794, ISSN: 1533-4880, DOI: 10.1166/JNN.2009.212 | 12-15 | |
| A | * section 2.2 * | 1-11 | |

The present search report has been drawn up for all claims

| Place of search | Date of completion of the search | Examiner |
|---|---|---|
| Munich | 10 June 2013 | Panday, Narendra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 15 1727

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2013

| Patent document cited in search report | | Publication date | Patent family member(s) | Publication date |
|---|---|---|---|---|
| CN 102776594 | A | 14-11-2012 | NONE | |
| RU 2256675 | C2 | 20-07-2005 | | |
| WO 2010143901 | A2 | 16-12-2010 | KR 20120046714 A | 10-05-2012 |
| | | | US 2010316693 A1 | 16-12-2010 |
| | | | WO 2010143901 A2 | 16-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004190152 B
- KR 100797098
- EP 2026851 A
- CN 101440535
- JP 10259531 B
- JP 2160916 A
- WO 2008100163 A
- WO 2010143901 A
- RU 2401349
- JP 8081880 B
- WO 2006049478 A
- EP 100817911 A
- EP 100803176 A
- EP 0707793 A
- WO 2007140573 A
- CN 101708341
- JP 4370270 A